# EUROPEAN PATENT APPLICATION

(11) **EP 2 204 589 A1**
(43) Date of publication of application: **07.07.2010**
(21) Application number: 08842891.7
(22) Date of filing: 23.10.2008
(51) Int. Cl.: F16B 19/10

(54) **CLIP**

(30) Priority: 24.10.2007 JP 2007276083
(71) Applicant: Nifco INC., Yokohama-shi, Kanagawa 244-8522 (JP)
(72) Inventor: NAKAMURA, Takaaki, Yokohama-shi Kanagawa 244-8522 (JP)
(74) Representative: Gassner, Wolfgang
(86) International application number: PCT/JP2008/069253
(87) International publication number: WO 2009/054465

(57) **Abstract**

A clip is fixed on a fixing object by inserting a male part into an insertion ending position of a female part. The female part has a receiving space for the male part and includes a base portion provided with an insertion hole communicating with the receiving space and an inserted portion for a through hole provided in the fixing object. Thus, at least a portion of the inserted portion is deflected or an elastic engaging portion formed in the inserted portion is prevented from being deflected inwardly to thereby be fixed on the fixing object. In the base portion of the female part, a display body which moves forward by inserting the male part into the insertion ending position so as to enable to be visually confirmed at a forward movement ending position, is provided.

## Description

### Field of Technology

This invention relates to an improvement of a clip which is fixed on a fixing object so as to deflect out a portion of a female part by inserting a male part into this female part after the female part is inserted into a through hole provided in the fixing object such as a panel and the like, or so as to prevent the portion of the female part from being deflected inwardly.

### Background Art

There is a push rivet such that after divided leg portions of a rivet main body are inserted into an attachment hole formed in a panel, the leg portions are elastically deflected out by completely pushing a pin in, and sandwiching the panel with a flange portion of the rivet main body and the deflected-out leg portions, so that the push rivet is fixed on this. (See Patent Document 1)
Such a push rivet is appropriately fixed on the panel in a state that the pin is completely pushed in. Consequently, at the time of the fixing using such a push rivet, it was necessary to confirm whether or not the pin is sufficiently pushed in by measuring and the like.
Patent Document 1: Japanese Unexamined Patent Publication No. H5-302609

### Disclosure of the Invention

### Problems to be Solved by the Invention

The main feature to be solved by the present invention is to enable easy confirmation of whether or not the male part (pin) constituting this kind of clip (rivet), is pushed into the female part (rivet main body) up to an insertion ending position thereof so that the clip is fixed onto the fixing object in a desired state without measuring an insertion state of the male part or the like.

### Means for Solving the Problems

In order to achieve the above-mentioned feature, in a first viewpoint, a clip is fixed on a fixing object so as to deflect out at least a portion of an inserted portion by inserting a male part into a female part which includes a receiving space for the male part, and also comprises a base portion wherein an insertion hole communicating with this receiving space is formed and the inserted portion for a through hole which is provided in the fixing object, up to an insertion ending position, or so as to prevent an elastic engaging portion formed in the inserted portion from being deflected inwardly. The base portion of the female part is provided with a display body which moves forward due to the insertion of the male part to the insertion ending position, so that the display body enables a visual confirmation of a forward movement ending position.

In the clip constituted in this manner, the portion of the inserted portion of the female part is deflected out by inserting the male part into the insertion ending position, or the elastic engaging portion formed in the inserted portion is prevented from being deflected inwardly, so that in a formation position of the through hole of the fixing object, the clip is fixed on such fixing object by sandwiching the fixing object by the base portion of the female part and this deflected-out portion or the elastic engaging portion. With that, since the display body moves forward, it enables easy visual confirmation of the insertion and a desired fixed state of the clip with respect to the insertion of the male part up to the insertion ending position, without measuring the insertion state of the male part or the like.

Also, in order to overcome the above-mentioned problem, in a second viewpoint, the clip is fixed onto the fixing object so as to deflect out at least the portion of the inserted portion by inserting the male part into the female part which includes the receiving space for the male part and also comprises the base portion wherein the insertion hole communicating with this receiving space is formed and the inserted portion for the through hole provided in the fixing object, up to the insertion ending position, or so as to prevent the elastic engaging portion formed in the inserted portion from being deflected inwardly. The base portion of the female part is provided with the display body which moves forward by inserting the male part into the insertion ending position, moves backward by extracting the male part from the insertion ending position, and also enables the insertion to be visually confirmed at the forward movement ending position.

In the clip constituted in this manner, the portion of the inserted portion of the female part is deflected out by inserting the male part into the insertion ending position, or the elastic engaging portion formed in the inserted portion is prevented from being deflected inwardly. Accordingly, in the formation position of the through hole of the fixing object, the clip is fixed on the fixing object by sandwiching the fixing object by the base portion of the female part and this deflected-out portion or the elastic engaging portion. With that, since the display body moves forward it enables the desired fixed state of the clip produced by inserting the male part up to the insertion ending position, to be easily confirmed without measuring the insertion state of the male part or the like. If the male part which is in the insertion ending position is extracted and the fixing of the clip is released, the display body moves backward, so that it allows to it be confirmed that the fixing relative to the fixing object is released.

If such display body is provided in a movable part which is combined in the base portion of the female part so as to be movable, and the display body is positioned in the forward movement ending position at the forward movement ending position of this movable part, the movable part is moved forward by the insertion of the male part into the insertion ending position, so that the display body enables this insertion to be visually confirmed. Also, by extracting the male part from the insertion ending position, the movable part is moved backward, so that the display body cannot be visually confirmed.

The above-mentioned movable part may be connected to the display body through a connecting portion which is elastically deformable, and be supported by this display body in an uplifted manner. Also, the movable part may comprise a base against which a portion of the male part is pressed by inserting the male part into the insertion ending position, and the display body is enable to visually confirm this by elastically deforming the connecting portion at the insertion ending position.

In such case, if the male part is inserted up to the insertion ending position, the portion of the male part is pressed against the base, and the base can be moved in an insertion direction of the male part. Then, due to this movement of the base, the connecting portion is elastically deformed and the display body is moved up to the forward movement ending position, so that it enables a visual confirmation of this. In this case, moreover, if a backward-movement projection which is caught by the base of the movable part when the male part is extracted from the insertion ending position, is provided in the male part, the backward movement of the above-mentioned movable part and additionally, the backward movement of the display body can be assisted.

The above-mentioned movable part may be combined in the base portion of the female part so as to be rotatable, a cam groove may be formed in either one of this movable part or the male part, and a projected portion which is housed in this cam groove in a complementary manner by inserting the male part into the insertion ending position, may be formed in the other of the movable part or the male part. Also, due to this cam groove and the projected portion, the display body may enable to be visually confirmed at the insertion ending position.

In this case, by inserting the male part up to the insertion ending position, the projected portion of the male part is inserted into the cam groove of the movable part, and the movable part which is in a forward movement front position, is rotatably moved forward up to the forward movement ending position, so that the display body enables this to be visually confirmed. Also, by extracting the male part which is in the insertion ending position, the movable part which is in the forward movement ending position is rotatably moved backward up to the forward movement front position, so that the display body negates the visual confirmation.

The above-mentioned movable part may be pushed by the portion of the male part by inserting the male part into the insertion ending position, be slidably moved in a direction of moving away from the insertion hole, and be completely finished being slidably moved at the insertion ending position, so that the display body may enable this to be visually confirmed.

In this case, by inserting the male part up to the insertion ending position, the display body may be moved forward and pushed out in the direction of moving away from the insertion hole, and the display body enables this to visually confirm the forward movement ending position.

In each clip, a support space of the movable part may be formed inside the base portion of the above-mentioned female part. Also, an open portion communicating with the support space may be provided on an upper surface side of this base portion, and the display body which is in the forward movement ending position may enable this to be visually confirmed through this open portion. In this case, the display body enables visual confirmation of the forward movement ending position, and also can be incapable of being visually confirmed by housing the display body inside the support space at the forward movement front position.

If a stopper portion which mutually engages the above-mentioned movable part and the base portion of the female part at the forward movement front position of the movable part, is formed, a state where the movable part is in the forward movement front position and the display body cannot be visually confirmed, can be stably maintained.

If a color of the above-mentioned movable part is varied from colors of the female part and the male part, the display body which is in the forward movement ending position can be easily confirmed further.

Also, in order to achieve the above-mentioned problem, in a third viewpoint, the clip is fixed on the fixing object so as to deflect out at least the portion of the inserted portion by inserting the male part into the female part which includes the receiving space for the male part and also comprises the base portion wherein the insertion hole communicating with this receiving space is formed and the inserted portion for the through hole provided in the fixing object, up to the insertion ending position, or so as to prevent the elastic engaging portion formed in the inserted portion from being deflected inwardly. The base portion of the female part is provided with a shield body which hides a display portion provided in this base portion at the forward movement front position, moves forward by inserting the male part into the insertion ending position, and is housed inside the base portion at the forward movement ending position so that the above-mentioned display portion enables this to be visually confirmed.

As for the clip constituted in this manner, the portion of the inserted portion of the female part is deflected out by inserting the male part into the insertion ending position, or the elastic engaging portion formed in the inserted portion is prevented from being deflected inwardly, so that in the formation position of the through hole of the fixing object, the clip is fixed on the fixing object by sandwiching the fixing object by the base portion of the female part and this deflected-out portion or the elastic engaging portion. With that, since the display portion of the base portion enables this to be visually confirmed by the forward movement of the shield body, the male part is inserted up to the insertion ending position, so that the desired fixed state of the clip can be easily confirmed without measuring the insertion state of the male part and the like.

### Effect of the Invention

In the clip according to the present invention, whether or not the male part is inserted into the female part up to the insertion ending position so that such clip is fixed on the fixing object with the desired state, can be easily confirmed by the display body which is moved forward to a position of enabling this to be visually confirmed by inserting into the insertion ending position without measuring the insertion state of the male part and the like.

### Brief Description of the Drawings

Fig. 1 is a cut-away side view of essential parts of a first example.
Fig. 2 is a side view showing a use state thereof.
Fig. 3 is a cut-away side view of the essential parts thereof.
Fig. 4 is a perspective view of a movable part according to the first example.
Fig. 5 is a perspective view of the movable part according to the first example.
Fig. 6 is a perspective view of a female part according to the first example.
Fig. 7 is a side view thereof.
Fig. 8 is a side view thereof.
Fig. 9 is a cross sectional view thereof.
Fig. 10 is a cross sectional view thereof.
Fig. 11 is a side view of a male part according to the first example.
Fig. 12 is a side view thereof.
Fig. 13 is a cut-away side view of essential parts of a second example.
Fig. 14 is a side view showing a use state thereof.
Fig. 15 is a cut-away side view of the essential parts thereof.
Fig. 16 is a plan view thereof.
Fig. 17 is a plan view of the movable part according to the second example.
Fig. 18 is a sectional view taken along line A-A in Fig. 17.
Fig. 19 is an expansion structural view of a B portion in Fig. 17.
Fig. 20 is a side view of the female part according to the second example.
Fig. 21 is a side view thereof.
Fig. 22 is a cross sectional view thereof.
Fig. 23 is a cross sectional view thereof.
Fig. 24 is a side view of the male part according to the second example.
Fig. 25 is a side view thereof.
Fig. 26 is a sectional view taken along line C-C in Fig. 25.
Fig. 27 is an expansion structural view of a D portion in Fig. 26.
Fig. 28 is a side view of a third example.
Fig. 29 is a cut-away side view of essential parts thereof.
Fig. 30 is a cross sectional view thereof.
Fig. 31 is a side view showing a use state thereof.
Fig. 32 is a cut-away side view of the essential parts showing the use state thereof.
Fig. 33 is a cross sectional view showing the use state thereof.
Fig. 34 is a plan view of the movable part according to the third example.
Fig. 35 is a sectional view taken along line E-E in Fig. 34.
Fig. 36 is a sectional view taken along line F-F in Fig. 34.
Fig. 37 is a sectional structural view of essential parts of a fourth example.
Fig. 38 is a sectional structural view of the essential parts of the fourth example.
Fig. 39 is a sectional structural view of essential parts of a fifth example.
Fig. 40 is a sectional structural view of the essential parts of the fifth example.

### Best Modes of Carrying out the Invention

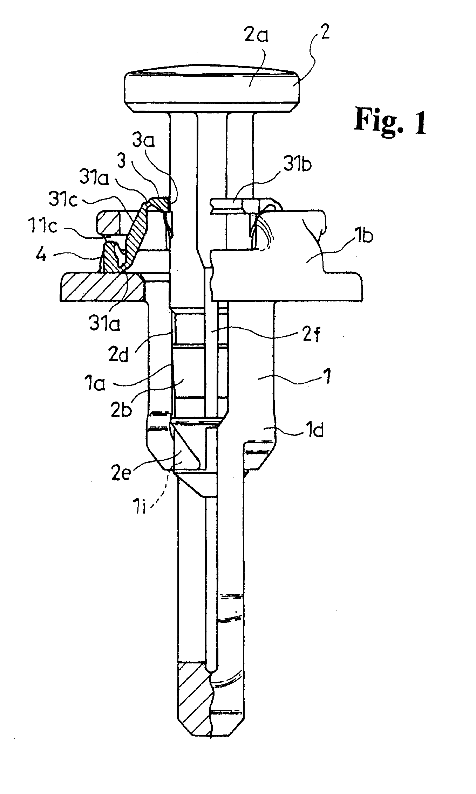

Hereinafter, best modes of carrying out the present invention will be explained with reference to Figs. 1 to 40.

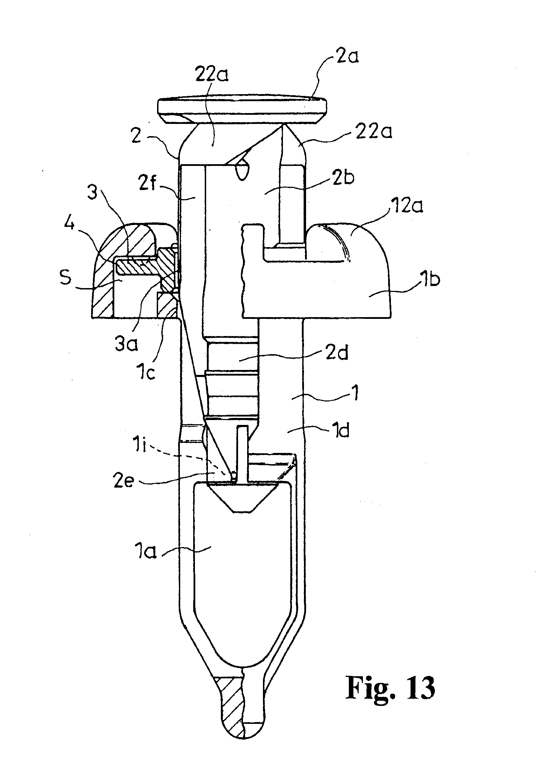

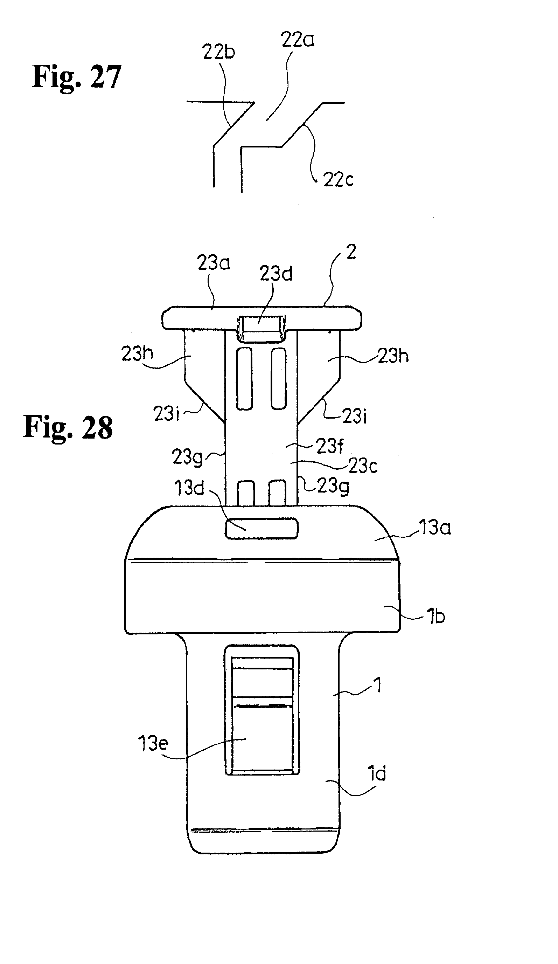

Incidentally, here, Figs. 1 to 12 show one (a first example) of the embodiments of the present invention; Figs. 13 to 27 show another (a second example) of the embodiments; and Figs. 28 to 36 additionally show a still another (a third example) of the embodiments, respectively.

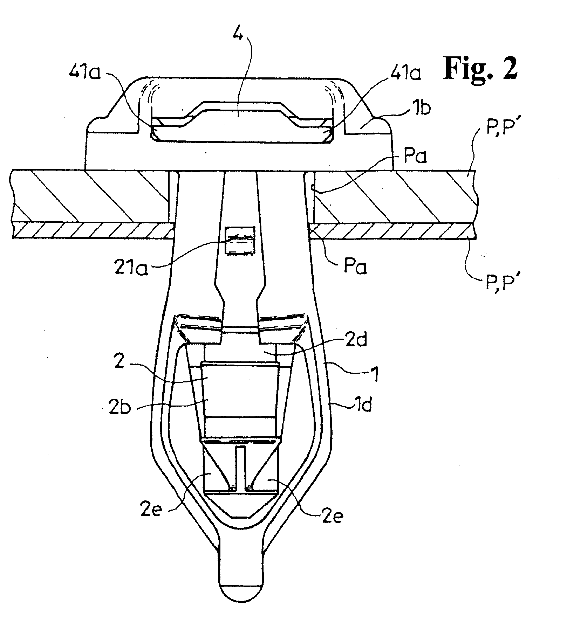

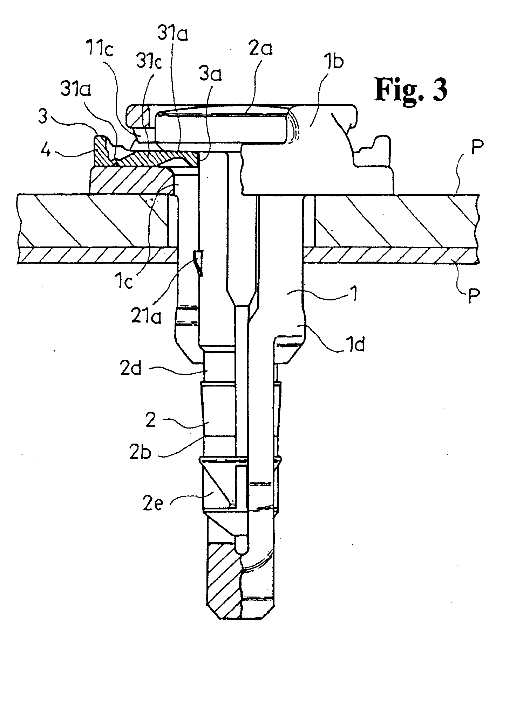

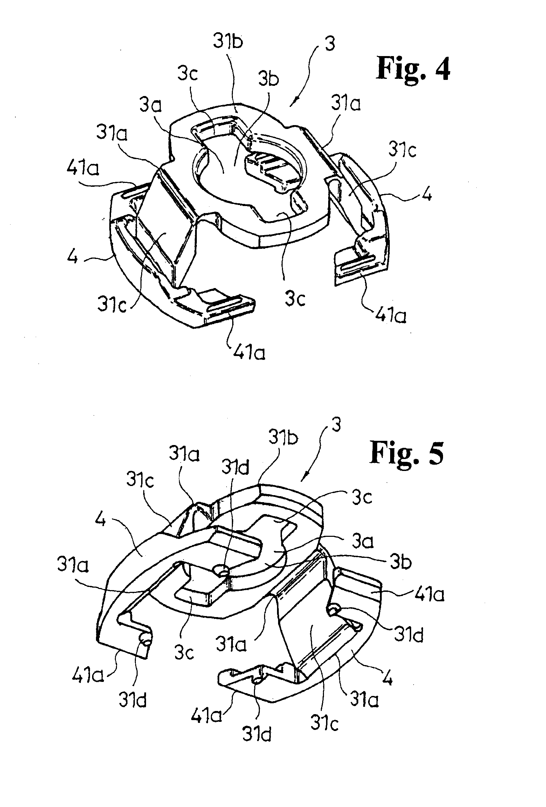

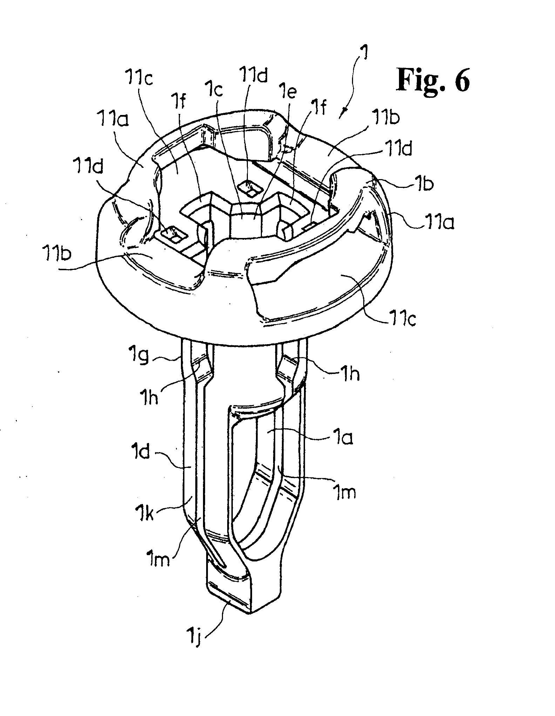

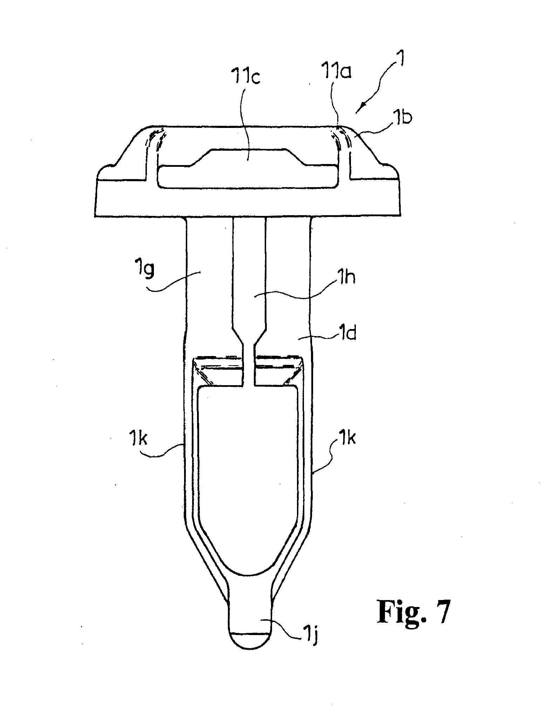

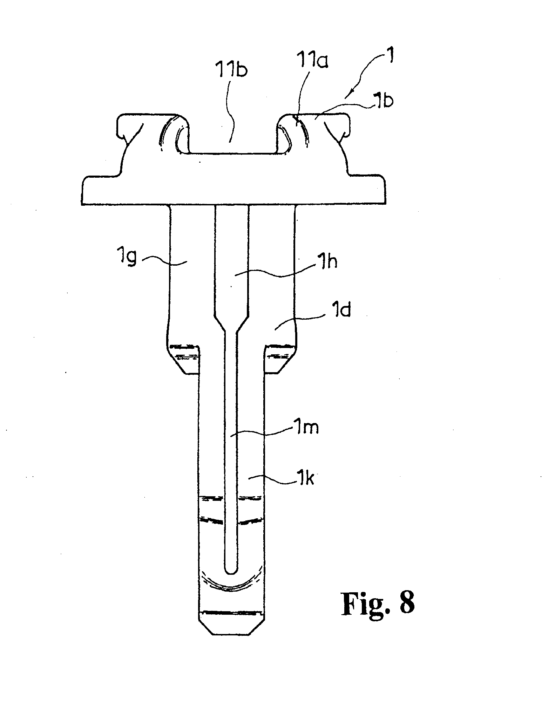

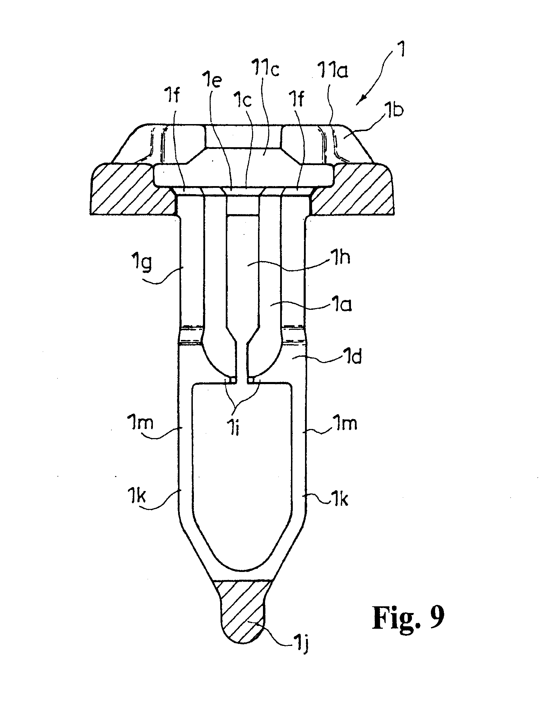

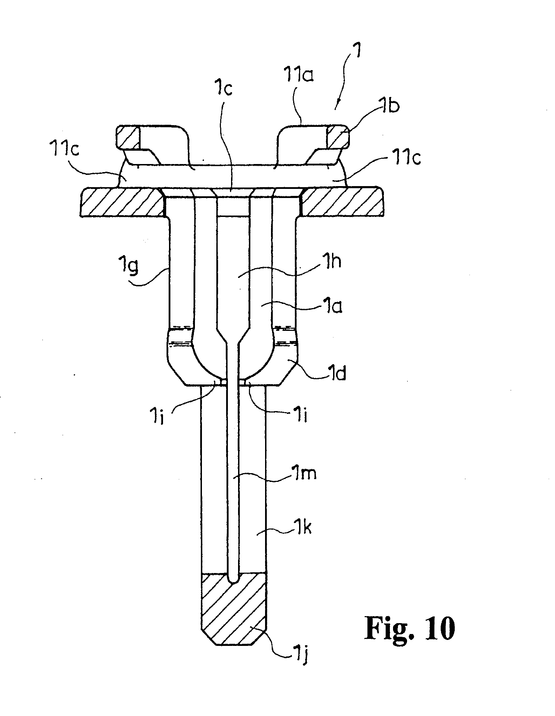

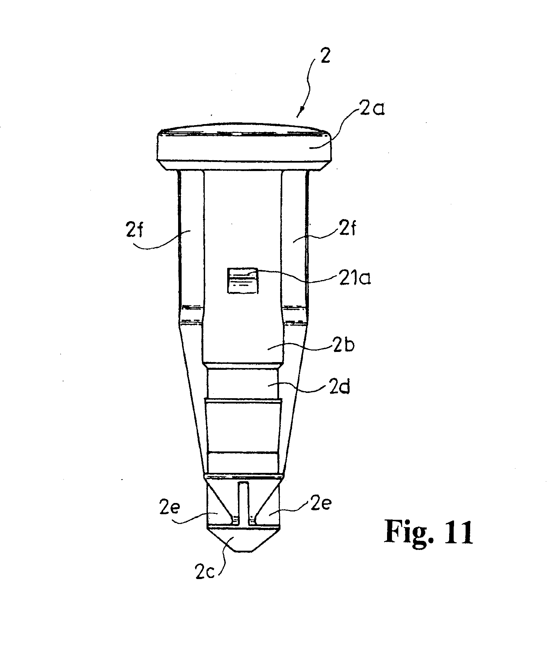

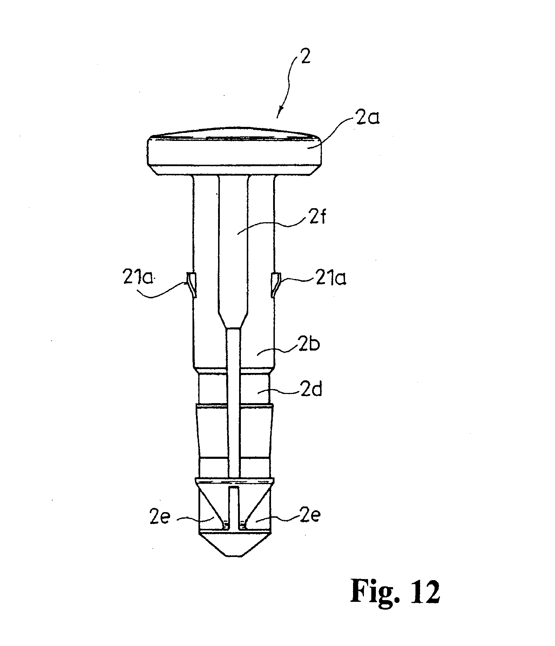

Concretely, Fig. 1 shows a clip in a state wherein a male part 2 is temporarily engaged with a female part 1, Figs. 2 and 3 show the clip in a state of being fixed on a fixing object P by actually engaging the male part 2 with the female part 1, respectively. Fig. 3 shows the clip viewed from a direction which is 90-degrees different from the direction of Fig. 2. Figs. 4, 5 show a movable part 3 in perspective, Figs. 6 to 10 show the female part 1, and Figs. 11, 12 show the male part 2, respectively. Fig. 8 shows the female part 1 viewed from a direction which is 90-degrees different from the direction of Fig. 7. Also, Fig. 10 shows the female part 1 in section in a direction which is 90-degree different from the position of Fig. 9. Moreover, Fig. 12 shows the male part 2 viewed from a direction which is 90-degrees different from the direction of Fig. 11.

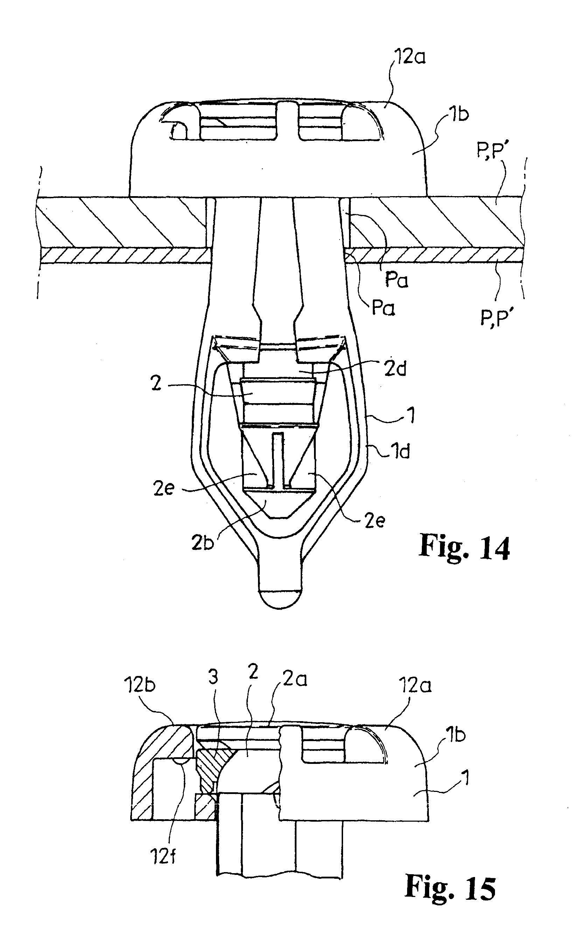

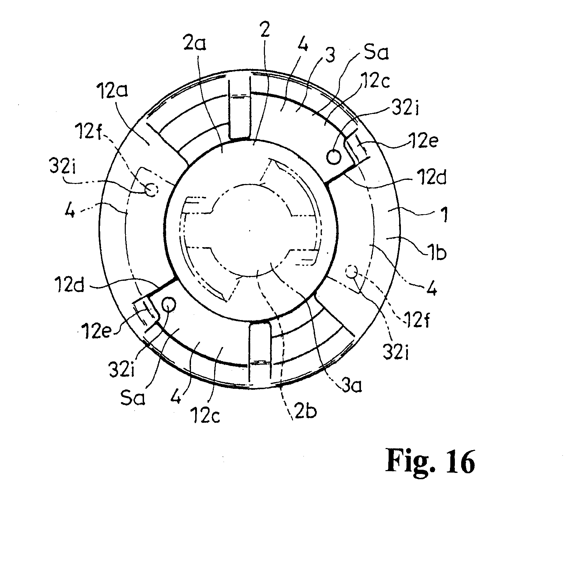

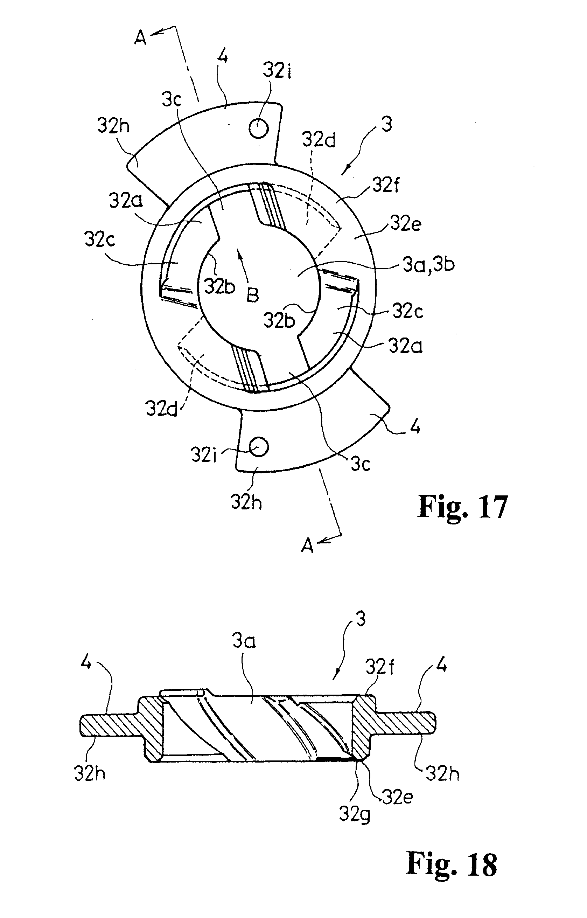

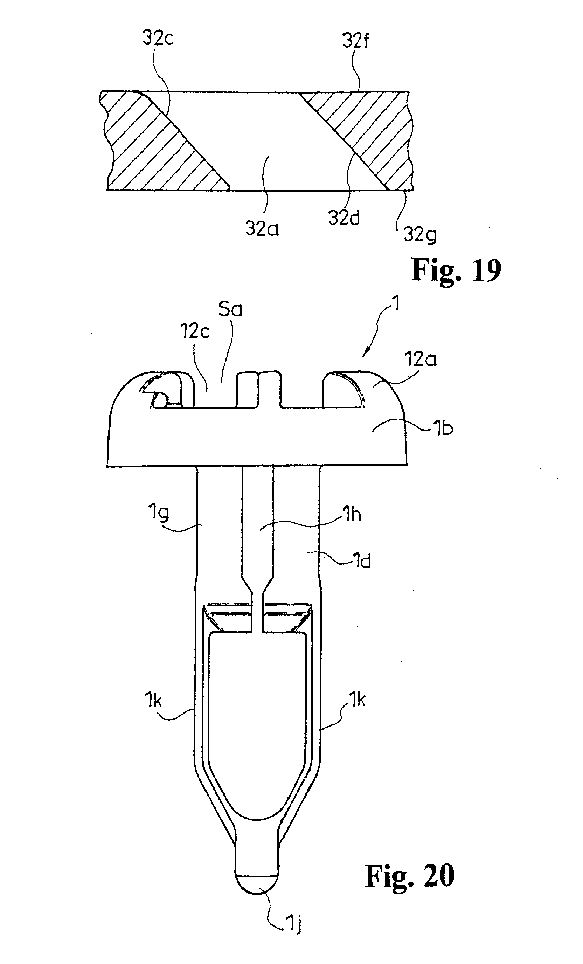

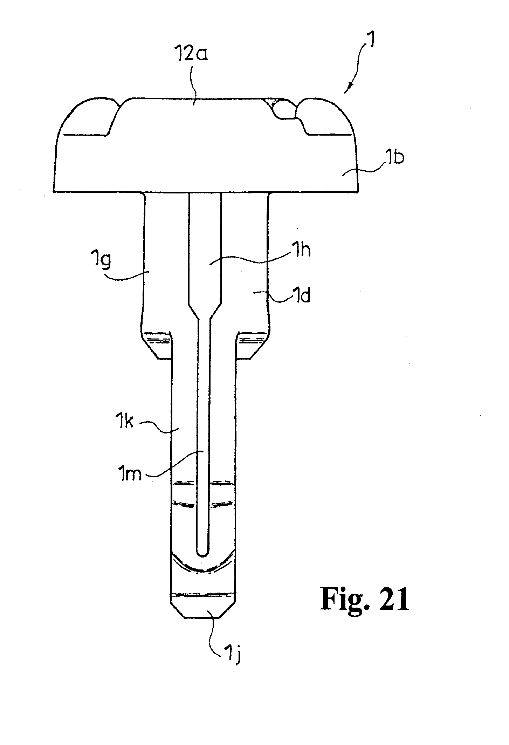

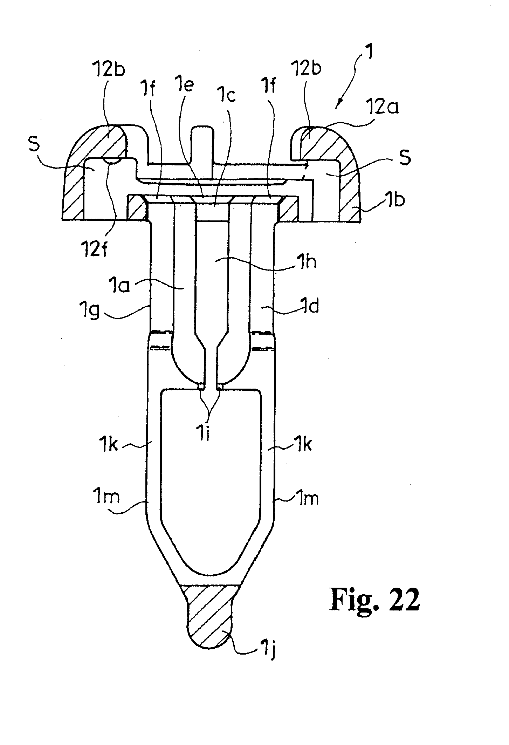

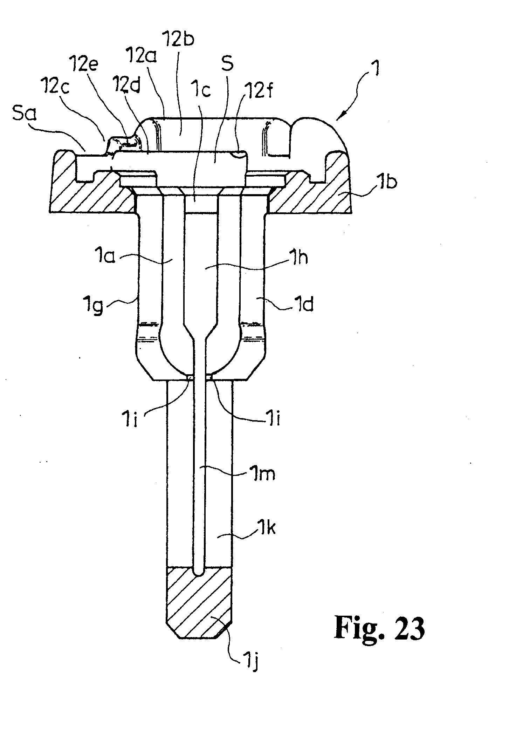

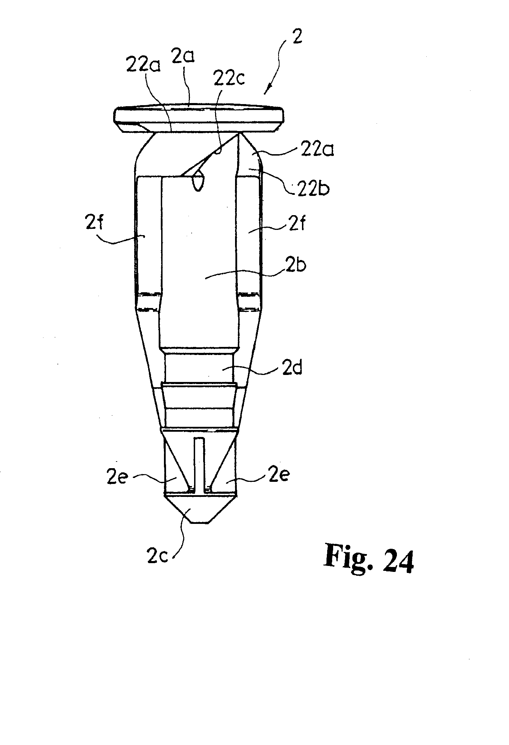

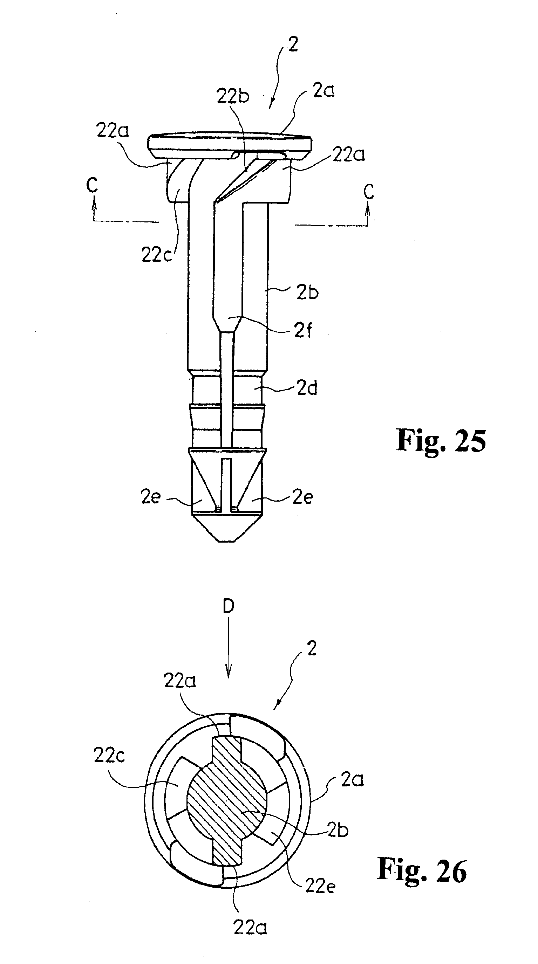

Additionally, Fig. 13 shows the clip in a state wherein the male part 2 is temporarily engaged with the female part 1, and Fig. 14 shows the clip in the state of being fixed on the fixing object P by actually engaging the male part 2 with the female part 1, respectively. Fig. 15 shows essential parts in section in a condition wherein a base portion 1b part of the female part 1 assumes the state shown in Fig. 14. Fig. 16 shows the state of Fig. 14 viewed from a head portion 2a side of the male part 2, and in Fig. 14, the movable part 3 which is in a forward movement front position is shown by phantom lines. Figs. 17 to 19 show the movable part 3, respectively, and especially, in Fig. 19, a cam groove 32a is shown by being enlarged so that a configuration of the cam groove 32a can be easily understood. Figs. 20 to 23 show the female part 1, and Figs. 24 to 27 show the male part 2, respectively. Fig. 21 shows the female part 1 viewed from a direction which is 90-degrees different from the direction of Fig. 20. Also, Fig. 23 shows the female part 1 in section in a direction which is 90-degrees different from the position of Fig. 22. Moreover, Fig. 25 shows the male part 2 viewed from a direction which is 90-degrees different from the direction of Fig. 24. Also, especially in Fig. 27, a projected portion 22a is shown enlarged so that a condition of the projected portion 22a can be easily understood.

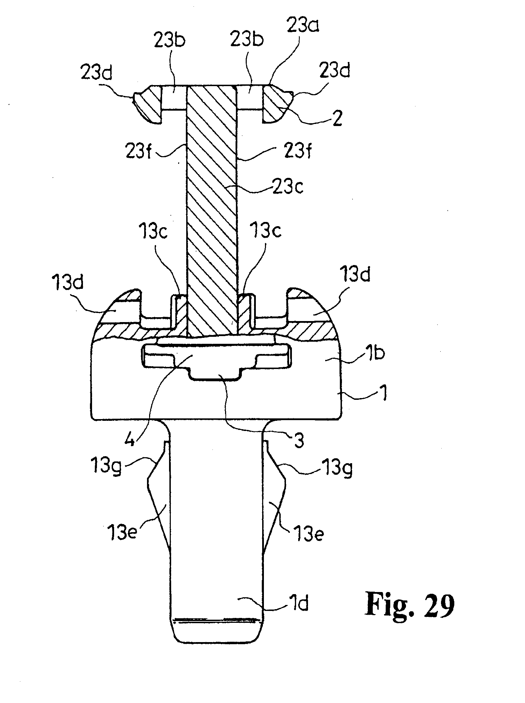

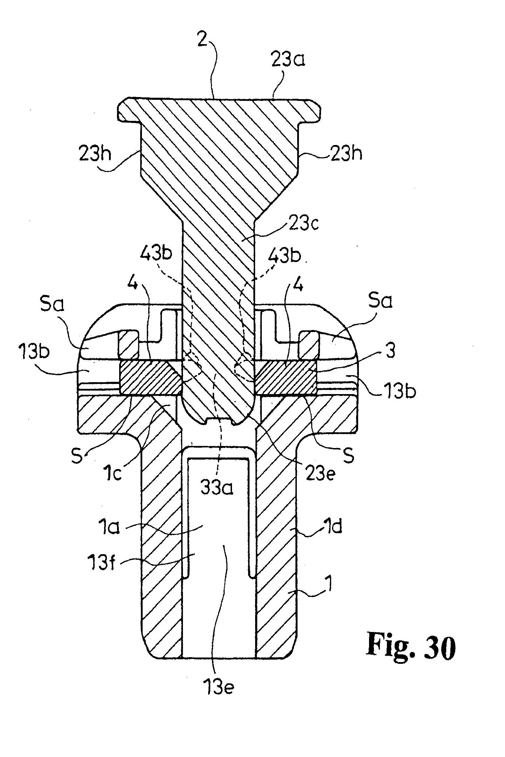

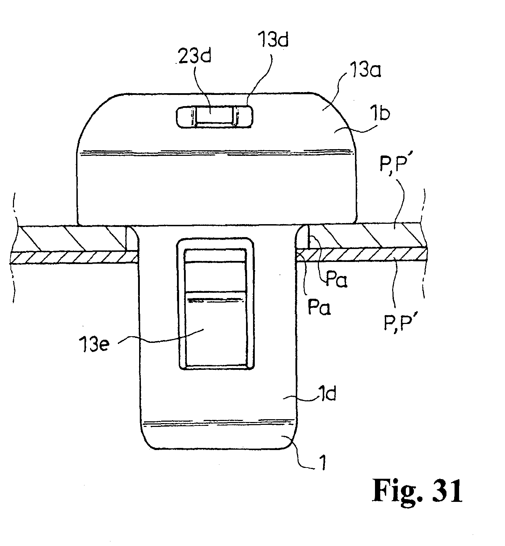

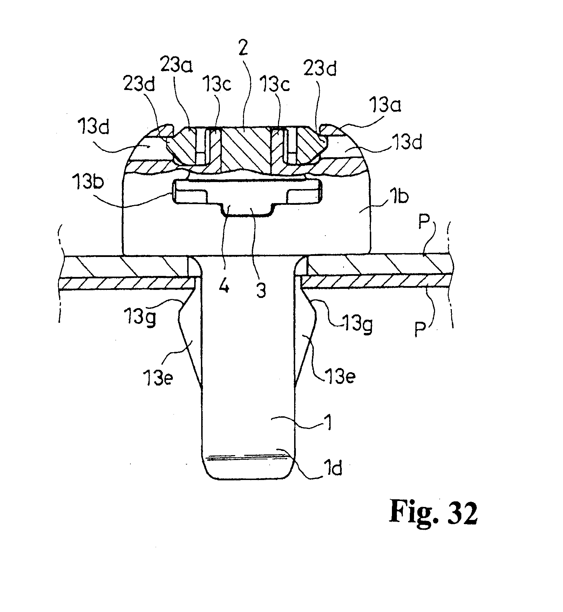

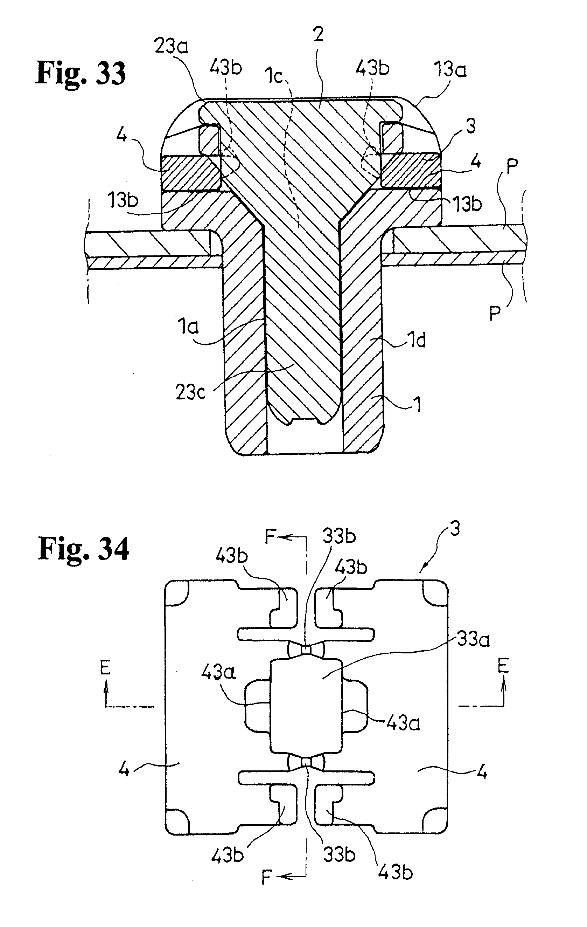

Also, Figs. 28 to 30 show the clip in a state wherein the male part 2 is temporarily engaged with the female part 1, and Figs. 31 to 33 show the clip in a state wherein the male part 2 is actually engaged with the female part 1 so that the clip is fixed on the fixing object P, respectively. Fig. 30 shows the clip viewed from a direction which is 90-degrees different from the direction of Fig. 29, and Fig. 33 shows the clip viewed from a direction which is 90-degrees different from the direction of Fig. 32. Figs. 34 to 36 show the movable part 3, respectively.

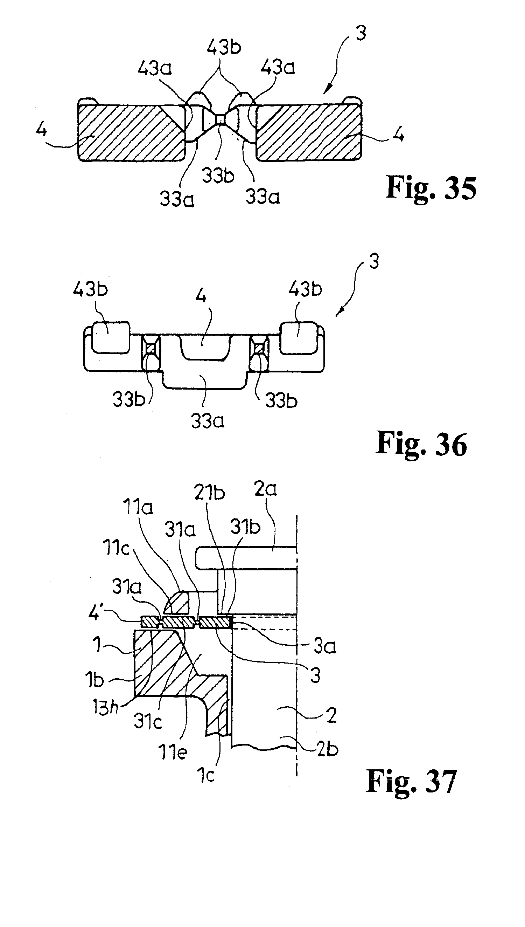

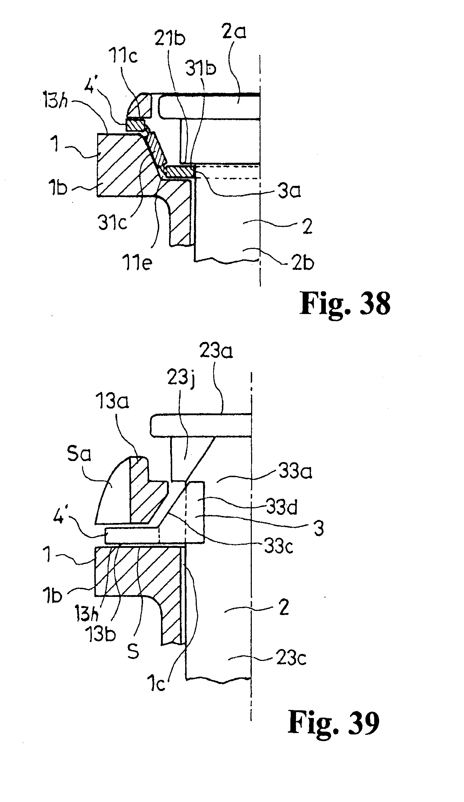

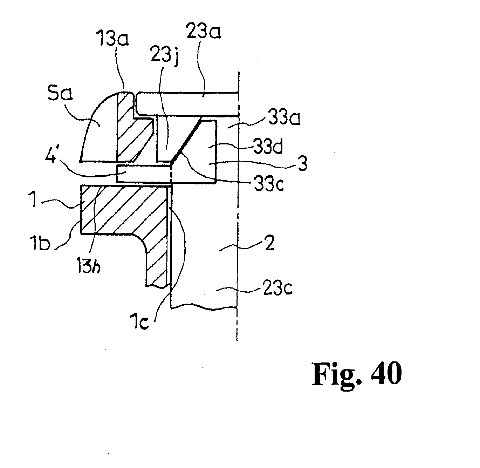

Also, Figs. 37, 38 show one (a fourth example) of the embodiments wherein a portion of the structure of the above-mentioned first example is modified, and Figs. 39, 40 show one (a fifth example) of the embodiments wherein a portion of the structure of the above-mentioned third example is modified, respectively.

The clip according to the embodiments is fixed on the fixing object P so as to deflect out at least a portion of the female part 1 by inserting the male part 2 into the female part 1 after the female part 1 is inserted into through holes Pa provided in the fixing object P such as a panel P' and the like, or so as to prevent the portion of the female part 1 from being deflected inwardly.

Typically, such clip is used for fixing two or more fixing objects P such as two or more sheets of panels P' and the like which are respectively provided with the above-mentioned through holes Pa. Specifically, after the two or more fixing objects P are overlaid so that the through holes Pa are mutually communicated, the clip is fixed on such communicated through holes Pa as above. Accordingly, by preventing the fixing objects P at formation portions of the through holes Pa from separating, two or more fixing objects P are fixed together.

Such a clip comprises the female part 1 and the male part 2. In the female part 1, the movable part 3 provided with display bodies 4 described hereinafter is additionally combined, and by this movable part 3, such display bodies 4 are provided in the female part 1.

The female part 1 includes a receiving space 1a for the male part 2, and also is provided with the base portion 1b where an insertion hole 1c communicating with this receiving space 1a is formed and an inserted portion 1d for the through holes Pa provided in the fixing object P.

In the above-mentioned first and second examples, the base portion 1b is constituted so as to be disk-shaped. The insertion hole 1c is formed in the center of such base portion 1b. In the illustrated examples, the insertion hole 1c is constituted by a combination of a circular hole portion 1e which is approximately equal to the largest diameter of the after-mentioned axial portion 2b of the male part 2, and branched hole portions 1f provided in four portions at intervals of approximately 90 degrees in a direction circling this circular hole portion 1e and formed so as to extend in a radial direction from the circular hole portion 1e.

On the other hand, the inserted portion 1d is constituted so as to form an extending leg shape whose one end is integrally connected to one surface of the base portion 1b with the base portion 1b as a head. Such inserted portion 1d is provided with a cylindrical portion 1g, an end axis 1j, and connecting pieces 1k between this cylindrical portion 1g and the end axis 1j.

The cylindrical portion 1g opens both cylindrical ends, and also communicates the cylindrical inner space with the circular hole portion 1e of the above-mentioned insertion hole 1c so as to integrally connect one end of the cylinder to the base portion 1b. Also, such cylindrical portion 1g is divided into four by slits 1h provided in four portions at intervals of approximately 90 degrees in a direction of circling a cylindrical axis thereof. One end of each slit 1h is communicated with the branched hole portions 1f of the insertion hole 1c. Also, in the other end of the cylinder of the cylindrical portion 1g, claw portions 1i which inwardly project are formed.

The end shaft 1j is constituted as a solid body positioned on a hole axial line of the circular hole portion 1e of the above-mentioned insertion hole 1c.

The connecting pieces 1k have a band shape whose one end is integrally connected to the other end of the cylinder of the cylindrical portion 1g, and also whose other end is integrally connected to one end of the end shaft 1j, and are respectively provided in a facing position sandwiching the center of the inserted portion 1d. In the connecting pieces 1k, extending slits 1m communicated with the above-mentioned slits 1h and continuing to an end shaft 1j side, are formed. Each connecting piece 1k is formed so as to be divided into two by the extending slit 1m. A pair of connecting pieces 1k, 1k inclines such that on a connecting side to the above-mentioned end axis 1j, a pitch between the connecting pieces 1k, 1k, gradually narrows as the connecting pieces 1k, 1k come closer to this end axis 1j. Due to this incline, the connecting pieces 1k, 1k can be smoothly inserted into the through holes Pa.

On the other hand, by inserting the male part 2 into the female part 1 up to the insertion ending position (positions in Figs. 2, 14, 33), the male part 2 allows at least one portion of the inserted portion 1d to be deflected out, or prevents an elastic engaging portion 13e (the case of the third example) formed in the inserted portion 1d from being deflected inwardly. Thereby, the clip is fixed on the above-mentioned fixing object P.

In the above-mentioned first and second examples, such male part 2 is constituted by the axial portion 2b where the disk-shaped head portion 2a is provided in one end of the axis as a main body. The other end portion of such axial portion 2b, i.e., an end portion 2c is constituted so as to form a tapering cone shape whose head is cut out. In the intermediate portion of the axial portion 2b, an actual holding depressed portion 2d with a circular shape is formed. Also, temporary holding depressed portions 2e where the four claw portions 1i which are formed in the inserted portion 1d of the above-mentioned female part 1 can be respectively housed, are formed between the end portion 2c and the actual holding depressed portion 2d. Each temporary holding depressed portion 2e is constituted so as to gradually become shallower as it comes closer to an actual holding depressed portion 2d side, respectively.

In the above-mentioned first and second examples, the inner diameter at the formation position of the claw portions 1i of the inserted portion 1d of the female part 1 is approximately equal to the diameter at the deepest part position of the temporary holding depressed portion 2e of the axial portion 2b of the male part 2. The diameter at the position of the actual holding depressed portion 2d of the axial portion 2b of the male part 2 is larger than the diameter at the deepest part position of such temporary holding depressed portion 2e, and the diameter between the actual holding depressed portion 2d of the axial portion 2b of the male part 2 and the head portion 2a is formed larger than the diameter at the position of the actual holding depressed portion 2d of the axial portion 2b of such male part 2.

Then, in the above-mentioned first and second examples, the axial portion 2b of the male part 2 is inserted into the receiving space 1a of the female part 1 through the insertion hole 1c up to the position where the claw portions 1i are inserted into the temporary holding depressed portions 2e, so that the male part 2 and the female part 1 are temporarily engaged. (Figs. 1, 13) The male part 2 combined in the female part 1 in this manner can be further inserted up to the insertion ending position where the claw portions 1i are inserted into the depressed portion 2d.

In the above-mentioned first and second examples, the inserted portion 1d of the female part 1 is divided by the slits 1h and the extending slits 1m, and is constituted so as to enable elastic deformation with a connecting side to the base portion 1b as the deformation center. In the above-mentioned temporary engaged state, if the inserted portion 1d of the female part 1 is inserted into the through holes Pa of the fixing object P up to the position where the base portion 1b of the female part 1 is caught, and from this state, by using the head portion 2a, the male part 2 is operated to be pressed so as to be inserted toward the insertion ending position, the claw portions 1i are guided to the bottom of the temporary holding depressed portions 2e, and the inserted portion 1d is outwardly deflected out, so that the insertion of the male part 2 becomes allowable. If the male part 2 is inserted up to the insertion ending position, the inserted portion 1d of the female part 1 is slightly returned to be deflected, and the claw portions 1i are entered into the actual holding depressed portion 2d, so that an actual holding state is maintained. In this actual holding state, the fixing object P is sandwiched by the base portion 1b and a deflected-out portion of the inserted portion 1d, so that the clip is fixed on the fixing object P. (Figs. 2, 14)

In the above-mentioned first and second examples, the axial portion 2b of the male part 2 is provided with ribs 2f along an axial line of the shaft portion 2b on both sides of a diameter direction thereof, and the male part 2 can be inserted into the receiving space 1a of the female part 1 in a direction that the ribs 2f enter into the slits 1h and the extending slits 1m through the branched hole portions 1f of the insertion hole 1c.

Also, in the above-mentioned first and second examples, the display bodies 4 are provided in the base portion 1b of the female part 1, move forward by inserting the male part 2 into the insertion ending position, move backward by extracting the male part 2 from the insertion ending position, and also enables this to be visually confirmed at the forward movement ending position. In the above-mentioned first and second examples, such display bodies 4 are provided on a side opposite to the connecting side to the inserted portion 1d in the base portion 1b of the female part 1. Also, such display bodies 4 cannot be visually confirmed from the head portion 2a side of the male part 2 in the forward movement front position (positions in Figs. 1, 13), but can be visually confirmed from the head portion 2a side of the male part 2 in the forward movement ending position (positions in Figs. 3, 15, 16).

In all of the above-mentioned first to third examples, the portion of the inserted portion 1d of the female part 1 is deflected out by inserting the male part 2 into the insertion ending position, or the elastic engaging portion 13e formed in the inserted portion 1d is prevented from being deflected inwardly, so that information positions of the through holes Pa of the fixing object P, the clip is fixed on the fixing object P by sandwiching the fixing object P by the base portion 1b of the female part 1 and this deflected-out portion or the elastic engaging portion 13e (the case in the third example). With that, the display bodies 4 move forward and enable visual confirmation that the male part 2 is inserted up to the insertion ending position, and a state wherein the clip is in a desired fixed state can be easily confirmed without measuring an insertion state of the male part 2 and the like. (Figs. 3, 16, 33)

Moreover, in the above-mentioned first and second examples, if the male part 2 which is in the insertion ending position is operated to be extracted by inserting an end of a tool in between the head portion and the base portion 1b of the female part 1 and the like, and the fixing of the clip is released, the display bodies 4 move backward, so that the fixing of the clip relative to the fixing object P is recognizable as being released.

In the above-mentioned first and second examples, such display bodies 4 are provided in the movable part 3 which is combined in the base portion 1b of the female part 1 so as to enable to reciprocate.

Concretely, the movable part 3 which is provided with a through hole 3a of the axial portion 2b of the male part 2 is combined in the base portion 1b of the female part 1 so as to enable reciprocation, and also the axial portion 2b communicates this through hole 3a and the insertion hole 1c. Then, the movable part 3 and the male part 2 are coordinated such that the movable part 3 is operated to be moved forward by inserting the male part 2 into the insertion ending position, or that the movable part 3 is operated to be moved backward by extracting the male part 2 from the insertion ending position.

### (First example shown in Figs. 1 to 12)

In the example shown in Figs. 1 to 12, the movable part 3 is supported by the display bodies 4 in an uplifted manner by being connected to the display bodies 4 through connecting portions 31a which are elastically deformable. Also, the movable part 3 is provided with a base 31b where a portion of the male part 2 is pressed against by inserting the male part 2 into the insertion ending position, and the connecting portions 31a are elastically deformed at the insertion ending position, so that the display bodies 4 enable visual confirmation of this.

In the illustrated examples, on the side opposite to the connecting side to the inserted portion 1d in the base portion 1b of the female part 1, rising portions 11a which project so as to surround the insertion hole 1c are formed in a lateral side of the insertion hole 1c. On both sides of the diameter direction of the base portion 1b, dividing portions 11b of the rising portions 11a are formed. Also, on a pair of rising portions 11a, which are separated by the dividing portions 11b, window holes 11c which penetrate the rising portions 11a in a direction perpendicular to a central axis line of the female part 1, are respectively formed.

The base 31b has a plate shape which is provided with the through hole 3a in a penetrating state, and is supported so as to provide an interval between the base 31b and the insertion hole 1c and position the outer surface of the plate on the slightly upper side than ends of the rising portions 11a, on the upper side of the insertion hole 1c in the forward movement front position of the movable part 3. (Fig. 1) Such through hole 3a includes a central hole portion 3b penetrating the axial portion 2b of the male part 2 in accordance with the circular hole portion 1e of the insertion hole 1c. Also, on both sides of a diameter direction of this central hole portion 3b, the through hole 3a includes end hole portions 3c penetrating the ribs 2f of the male part 2 in accordance with the branched hole portions 1f of the insertion hole 1c.

The display bodies 4 are respectively provided on both sides of a diameter direction of the base 31b. In the forward movement front position of the movable part 3, each display body 4 can be respectively housed inside the window holes 11c of the rising portions 11a, and in this state, the display bodies 4 cannot be visually confirmed from the head portion 2a side of the male part 2. On both ends of the display bodies 4, guide portions 41a which respectively project to an insertion hole 1c side and guide to inner side surfaces of the window holes 11c, are formed. Connecting pieces 31c are disposed between intermediate portions of such display bodies 4 and a border portion on sides where end hole portions in the base 31b are not formed. One end of the connecting pieces 31c and the intermediate portion of the display bodies 4 are connected by resin hinge portions which become the above-mentioned connecting portions 31a. Also, the other end of the connecting pieces 31c and the above-mentioned border portion of the base 31b are connected by the resin hinge portions which become the above-mentioned connecting portions 31a.

The movable part 3 is combined in the base portion 1b of the female part 1 such that a pair of display bodies 4, 4 is respectively entered and housed into the window holes 11c of the rising portions 11a from the inside (insertion hole 1c side) of the rising portions 11a. Also, the base 31b is supported in the uplifted manner by the display bodies 4 which are housed in this manner through the connecting pieces 1k.

If the male part 2 is inserted up to the insertion ending position, the base 31b can be moved in an insertion direction of the male part 2 by pressing a portion of the male part 2. In the illustrated examples, the head portion 2a abuts against the base 31b. If the base 31b is moved in this manner, the connecting portions 31a are elastically deformed, and the display bodies 4 are moved up to the forward movement ending position, so that they can be visually confirmed. In the illustrated examples, the display bodies 4 project laterally from the window holes 11c by being guided to inner walls of the window holes 11c, so that the display bodies 4 enable visual confirmation of this from the side of the head portion 2a of the male part 2. (Fig. 3)

Also, in this example, backward-movement projections 21a which are caught by the base 31b of the movable part 3 when the male part 2 is extracted from the insertion ending position, are provided in the male part 2. In the illustrated examples, such backward-movement projections 21a are provided in positions of providing intervals of approximately 90 degrees in a direction of circling the axial portion 2b relative to the formation positions of the ribs 2f, and between the head portion 2a and the actual holding depressed portion 2d. Then, when the male part 2 is extracted from the insertion ending position, the backward-movement projections 21a are caught by the hole border of the through hole 3a of the base 31b.

When the male part 2 is extracted from the insertion ending position, a pressing force relative to the base 31b of the movable part 3 is released, the above-mentioned connecting portions 31a are elastically returned, the display bodies 4 are moved back and enter into the window holes 11c, and the base 31b is supported in the uplifted manner by such display bodies 4 again. If the backward-movement projections 21a are provided in the male part 2, the backward movement of the above-mentioned movable part 3 and additionally, the backward movement of the display bodies 4 can be assisted.

Also, in this example, stopper portions 11d, 31d engaging with each other in the forward movement front position of the movable part 3 are formed in the movable part 3 and the base portion 1b of the female part 1. In the illustrated examples, such stopper portions 11d, 31d are constituted by a projection which is formed on an undersurface contacting a face around the insertion hole 1c of the base portion 1b of the female part 1 in the guide portions of the display bodies 4; and a hole which is formed on the face around such insertion hole 1c and houses this projection. In this case, a state where the movable part 3 is in the forward movement front position and the display bodies 4 cannot be visually confirmed, can be stably maintained.

If a color of such movable part 3 is varied from colors of the female part 1 and the male part 2, the display bodies 4 which are in the forward movement ending position can be more easily confirmed.

Providing an elastic deformation characteristic for a portion including this characteristic in the female part 1 and the movable part 3 according to this example, can be easily ensured typically by making the female part 1 and the movable part 3 as plastic mold injection articles.

### (Second example shown in Figs. 13 to 27)

In the example shown in Figs. 13 to 27, the movable part 3 is combined in the base portion 1b of the female part 1 so as to be rotatable, and the cam grooves 32a are formed in either one of this movable part 3 and the male part 2, and the projected portions 22a which can be housed in the cam grooves 32a in a complementary manner by inserting the male part 2 into the insertion ending position, are formed in the other of the movable part 3 and the male part 2. Also, due to the cam grooves 32a and the projected portions 22a, the display bodies 4 enable visual confirmation of the insertion ending position.

In the illustrated examples, on the side opposite to the connecting side to the inserted portion 1d in the base portion 1b of the female part 1, circular rising portions 12a which project so as to surround the insertion hole 1c are formed in the lateral side of the insertion hole 1c. On a projecting end of the circular rising portions 12a, a holding portion 12b which juts to the insertion hole 1c side is formed, and a support space S of the movable part 3 is formed between this holding portion 12b and a face of the base portion 1b around the insertion hole 1c.

The holding portion 12b of such circular rising portions 12a is cut out respectively on both sides of the diameter direction of the insertion hole 1c, in the range of approximately 60 degrees in a direction of circling this insertion hole 1c, and in the forward movement ending position of the movable part 3, the cut-out portions 12c function as open portions Sa where the display bodies 4 enable this to be visually confirmed. (Fig. 16)

The movable part 3 is provided with a main body portion 32e with a disk shape and ear portions 32h with a plate piece shape which project from both sides of a diameter direction of this main body portion 32e. The main body portion 32e includes an external diameter which approximately blocks the space inside the circular rising portions 12a, and also is provided with the through hole 3a of the axial portion 2b of the male part 2 in the penetrating state. Such through hole 3a includes the central hole portion 3b which penetrates the axial portion 2b of the male part 2 in accordance with the circular hole portion 1e of the insertion hole 1c. Also, on both sides of the diameter direction of this central hole portion 3b, the end hole portions 3c which penetrate the ribs 2f of the male part 2 in accordance with the branched hole portions 1f of the insertion hole 1c, are provided.

On both sides of the diameter direction of the main body portion 32e, the ear portions 32h are respectively formed in a plate shape projecting in a direction perpendicular to an end face which is in a direction of the thicker main body portion 32e from this end face in the range of approximately 60 degrees in the direction of circling this main body portion 32e. Also, the ear portions 32h form projecting borders in an arc shape.

Then, in this example, such movable part 3 guides the projecting borders of the ear portions 32h to inner walls of the circular rising portions 12a, and supports the ear portions 32h so as to enable to turn in the above-mentioned support space S so that the ear portions 32h enable to carry out the forward movement which reaches to the forward movement ending position (Figs. 15, 16) wherein the ear portions 32h face the cut-out portions 12c from the forward movement front position (positions of dashed lines in Figs. 13, 16) where the ear portions 32h are housed on the lower side of the holding portion 12b on the lateral side of the above-mentioned cut-out portions 12c, and that the ear portions 32h enable to carry out the backward movement which is opposite to the forward movement. Specifically, in this example, such ear portions 32h function as the display bodies 4.

In the illustrated examples, the above-mentioned cam grooves 32a are formed in the movable part 3. The cam grooves 32a are respectively formed on both sides of the diameter direction of the movable part 3. Either cam groove 32a is formed so as to form a spiral groove shape which circles a hole axis of the central hole portion 3b of the through hole 3a. Groove openings 32b of the cam grooves 32a face to the inward of the through hole 3a. One groove wall of the cam grooves 32a faces to an insertion near side (upper side in Fig. 19) of the male part 2. (This one groove wall is hereinafter called upper walls 32c.) The upper walls 32c start from a surface 32f of the main body portion 32e, gradually lower to a rear surface 32g side of the main body portion 32e, and end at the end hole portions 3c. On the other hand, the other groove wall of the cam grooves 32a faces to an insertion tip side (lower side in Fig. 19) of the male part 2. (This other groove wall is hereinafter called lower walls 32d.) The lower walls 32d start from a rear surface 32g of the main body portion 32e, are gradually elevated to a surface 32f side of the main body portion 32e, and end at the end hole portions 3c. Then, the upper walls 32c and the lower walls 32d are formed so as to be approximately parallel in any position.

On the other hand, in the illustrated examples, the above-mentioned projected portions 22a are formed in the male part 2. In the illustrated examples, the projected portions 22a which form a rib shape along a helical line circling the axial portion 2b, are formed in the connecting portion between the axial portion 2b and the head portion 2a of the male part 2, and on both sides of the diameter direction of this axial portion 2b. A projecting width of the projected portions 22a is approximately equal to a depth of the above-mentioned cam grooves 32a. One lateral face of the projected portions 22a faces upward (hereinafter, this one lateral face is called an upper side face 22b.), and the other lateral face of the projected portions faces downwardly. (Hereinafter, this other lateral face is called a lower side face 22c.) Then, this upper side face 22b and the lower side face 22c are formed so as to be approximately equal in any position. (Fig. 27) The lower end of such projected portions 22a is continued to an end portion on the head portion 2a side of the ribs 2f. Thereby, in the illustrated examples, the movable part 3 is not turned to be moved forward until just before the male part 2 is completely finished being inserted into the insertion ending position, and the movable part 3 is turned to be moved forward after the lower end of the projected portions 22a is entered into the end hole portions 3c of the through hole 3a of the movable part 3.

If the male part 2 is inserted up to the insertion ending position, the projected portions 22a of the male part 2 are entered into the cam grooves 32a of the movable part 3 which is in the forward movement front position. The cam grooves 32a are formed so as to form the spiral groove shape which circles the hole axis of the central hole portion 3b of the through hole 3a of the movable part 3. On the other hand, the male part 2 is inserted into the female part 1 only in a state wherein the ribs are entered into the branched hole portions 1f of the insertion hole 1c without rotating, so that due to the lower side face 22c of the projected portions 22a, the upper walls 32c of the cam grooves 32a are pushed in, and the movable part 3 which is in the forward movement front position is rotatably moved forward up to the forward movement ending position. If the movable part 3 is moved forward in this manner, the display bodies 4 show up in the open portions Sa, and enable this to be visually confirmed. (Figs. 14 to 16) Since the projected portions 22a can be housed in the cam grooves 32a in the complementary manner, if the male part 2 which is in the insertion ending position is extracted, due to the upper side face 22b of the projected portions 22a, the lower walls 32d of the cam grooves 32a are pressed up, and the movable part 3 which is in the forward movement ending position is rotatably moved backward up to the forward movement front position. If the movable part 3 is moved backward in this manner, the display bodies 4 are housed inside the support space S which is positioned on the lateral side of the open portions Sa, and cannot be visually confirmed. (Fig. 13)

Also, in this example, stopper portions 12f, 32i which are engaged with each other in the forward movement front position of the movable part 3, are formed in the movable part 3 and the base portion 1b of the female part 1. In the illustrated examples, such stopper portions 12f, 32i are constituted by depressed places formed on surface sides of the ear portions 32h of the movable part 3, and projections which can be housed in the depressed places formed in inner walls of the holding portion 12b of the rising portions 11a of the base portion 1b. In this case, the state where the movable part 3 is in the forward movement front position and the display bodies 4 cannot be visually confirmed, can be stably maintained.

Incidentally, in this example, when the movable part 3 is in the forward movement ending position, hold-down portions 12e which are caught by outer borders of the ear portions 32h from the upper side, are formed in feed opening portions 12d into the open portions Sa.

If the color of such movable part 3 is varied from the colors of the female part 1 and the male part 2, the display bodies 4 which are in the forward movement ending position can be more easily recognized.

Providing the elastic deformation characteristic for the portion including this characteristic in the female part 1 and the movable part 3 according to this example, can be easily ensured typically by making such female part 1 and the movable part 3 as the plastic mold injection articles.

### (Third example shown in Figs. 28 to 36)

Even in the example shown in Figs. 28 to 36, the clip comprises the female part 1 and the male part 2. In the female part 1, the movable part 3 comprising the display bodies 4 described hereinafter is additionally combined, and due to this movable part 3, such display bodies 4 are provided in the female part 1.

The female part 1 includes the receiving space 1a for the male part 2, and also is provided with the base portion 1b where the insertion hole 1c communicating with this receiving space 1a is formed and the inserted portion 1d for the through holes Pa provided in the fixing object P.

In the illustrated examples, the base portion 1b is constituted so as to form a rectangular disk shape. The insertion hole 1c is formed in the center of such base portion 1b.

Also, in this example, the female part 1 is constituted so as to prevent the elastic engaging portions 13e formed in the inserted portion 1d from being deflected inwardly by inserting the male part 2 up to the insertion ending position. In this example, the inserted portion 1d of the female part 1 comprises the elastic engaging portions 13e which are respectively provided in a facing position. In the elastic engaging portions 13e, by a 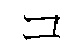 -shaped split groove provided in the inserted portion 1d, a base portion 1b side is a free end and an end side of the inserted portion 1d is the deformation center. Inner surfaces 13f of the elastic engaging portions 13e face the receiving space 1a. On the free end of a pair of elastic engaging portions 13e, engaging faces 13g facing the base portion 1b side are formed, and also a dimension between the free ends of the pair of elastic engaging portions 13e, 13e is larger than a hole diameter of the through holes Pa of the fixing object P. If the inserted portion 1d of the female part 1 is entered into such through holes Pa, the elastic engaging portions 13e are returned to be deflected to the position where the free ends thereof are slipped out of the through holes Pa after the elastic engaging portions 13e are deflected inwardly once. Thereby, the female part 1 is engaged with the fixing object P between the base portion 1b thereof and the above-mentioned engaging faces 13g. From this state, if the male part 2 is inserted into the female part 1 up to the insertion ending position, due to the inserted male part 2, the elastic engaging portions 13e are prevented from being deflected inwardly, and the clip is strongly fixed on the fixing object P.

On the other hand, in this example, the male part 2 is constituted by an axial portion 23c which comprises a head portion 23a in an axial one end as a main body. The axial portion 23c is constituted so as to form the plate shape with a thickness and a width.

Also, in this example, in a facing position sandwiching the insertion hole 1c in the base portion 1b of the female part 1, holding wall portions 13c along wall faces 13d are formed in the insertion direction of the male part 2, respectively. Also, a pitch between a pair of holding wall portions 13c, 13c is made slightly smaller than the dimension between faces 23f of wide-ranging sides of the axial portion 23c of the male part 2.

Then, in the illustrated examples, in a state wherein only the other end 23e side of the axial portion 23c of the male part 2 is entered into the insertion hole 1c of the female part 1, the other end 23e side of this axial portion 23c is sandwiched by the pair of holding wall portions 13c, 13c, so that the male part 2 and the female part 1 are temporarily engaged. (Figs. 28 to 31) The male part 2 which is combined in the female part 1 in this manner can be additionally inserted up to the insertion ending position (Figs. 31 to 33) wherein engaging claws 23d formed in border portions of the head portion 23a thereof are engaged with engaging holes 13d formed on the outside of the holding wall portions 13c. In the head portion 23a of the male part 2, window holes 23b which receive the holding wall portions 13c are formed at this insertion ending position.

Also, the display bodies 4 which are moved forward by inserting the male part 2 into the insertion ending position and enable this to be visually confirmed at the forward movement ending position, are provided in the base portion 1b of the female part 1. By inserting the male part 2 into the insertion ending position, the elastic engaging portions 13e are prevented from being deflected inwardly, so that in the formation positions of the through holes Pa of the fixing object P, the clip is fixed on the fixing object P by sandwiching the fixing object P by the base portion 1b of the female part 1 and this elastic engaging portions 13e. With that, the display bodies 4 moves forward and enable visual confirmation that the male part 2 is inserted up to the insertion ending position, and the state wherein the clip is in the desired fixed state can be easily confirmed without measuring the insertion state of the male part 2 and the like. (Figs. 32, 33)

Even in this example, such display bodies 4 are provided in the movable part 3 which is combined in the base portion 1b of the female part 1 so as to be movable.

Concretely, in the base portion 1b of the female part 1, a rising portion 13a circling the insertion hole 1c is formed. Also, guide holes 13b which are open in the lateral portion of the base portion 1b, are respectively formed in both side positions sandwiching the insertion hole 1c in this rising portion 13a in a direction perpendicular to the insertion direction of the male part 2. Then, the movable part 3 comprising a through portion 33a of the axial portion 23c of the male part 2 is provided in such base portion 1b through the guide holes 13b. Specifically, in this example, such guide holes 13b function as the support space S. The through portion 33a of such movable part 3 is positioned immediately above the insertion hole 1c, and the engaging claws 13d of the above-mentioned elastic pieces 13c are positioned on the upper side of this through portion 33a.

In this example, the movable part 3 is constituted such that the pair of display bodies 4, 4 are connected and coupled by broken-out possible portions 33b, and also that the above-mentioned through portion 33a of the male part 2 is in between the pair of display bodies 4, 4. By inserting the male part 2 into a position where the above-mentioned male part 2 and the female part 1 are temporarily engaged, the broken-out possible portions 33b are broken out, and also from this state, by inserting the male part 2 up to the insertion ending position, the display bodies 4 are moved forward and pushed out up to a visually-confirmable position.

The pair of display bodies 4, 4 is respectively constituted so as to form an approximately rectangular plate shape. This pair of display bodies 4, 4 is connected by a pair of broken-out possible portions 33b, 33b which are positioned in long side portions 43a of one side of the display bodies 4, 4. A space surrounded by the long side portions 43a which are positioned between this pair of broken-out possible portions 33b, 33b functions as the above-mentioned through portion 33a.

The broken-out portions 33b are constituted so as to form a cross-bridge piece shape whose central portion is constituted by a thin wall.

Rib-like portions 23h projecting from faces 23g of narrow sides are respectively formed on a head portion 23a, 2a side of the male part 2 and on the narrow sides of the axial portion 23c of the male part 2. The rib-like portions 23h respectively comprise inclined surfaces 23i on a side facing to the end side of the axial portion 23c. A pitch between a pair of rib-like portions 23h, 23h is larger than a pitch between the long side portions 43a of the display bodies 4 inside the through portion 33a of the movable part 3 in a state wherein the male part 2 and the female part 1 are temporarily engaged.

If the male part 2 is inserted up to the insertion ending position, an interval between the pair of display bodies 4, 4 is pushed and spread by the above-mentioned rib-like portions 23h, so that the display bodies 4 are pushed out in a direction of moving away from the insertion hole 1c inside the guide holes 13b, and moved forward up to the forward movement ending position. In this example, the open portions Sa communicating with such guide holes 13b are formed on a projected face of the rising portion 13a, and if the display bodies 4 are moved forward in this manner, they can be visually confirmed from a head portion 23a side of the male part 2 through the open portions Sa. (Fig. 33)

In the illustrated examples, the pair of display bodies 4, 4 constituting the movable part 3 respectively includes retaining claws 43b which project to the upper side on the outside of the broken-out possible portions 33b. In the forward movement front position and the forward movement ending position, respectively, the retaining claws 43b are caught by engaging portions which are not shown in the figures and formed on sidewall sides of the guide holes 13b, so that a state wherein the display bodies 4 are in the forward movement front position and a state wherein the display bodies 4 are in the forward movement ending position, are respectively maintained.

If the color of such movable part 3 is varied from the colors of the female part 1 and the male part 2, the display bodies 4 which is in the forward movement ending position can be more easily confirmed.

Providing the elastic deformation characteristic for the portion including this characteristic in the female part 1 and the movable part 3 according to this example, can be easily ensured typically by making such female part 1 and the movable part 3 as the plastic mold injection articles.

### (Fourth example shown in Figs. 37, 38)

Figs. 37, 38 mainly show an example wherein a portion of the structure of the movable part 3 which constitutes the above-mentioned first example is modified.

In this example, a shield body 4' is provided in the base portion 1b of the female part 1, and hides a display portion 13h provided in this base portion 1b at the forward movement front position. Also, the shield body 4' moves forward by inserting the male part 2 into the insertion ending position, and is housed inside the base portion 1b at the forward movement ending position, so that the above-mentioned display portion 13h enables visual confirmation of this. The display bodies 4 in the above-mentioned first example function as such shield body 4'.

The shield body 4' is connected to the outside of the base 31b comprising the through hole 3a of the axial portion 2b of the male part 2 through the connecting pieces 31c. The connecting pieces 31c and the base 31b, and the connecting pieces 31c and the display bodies 4 are connected by the connecting portions 31a which are elastically deformable. In the illustrated examples, in a state wherein the male part 2 is not inserted up to the insertion ending position, the base 31b, the shield body 4', and the connecting pieces 31c are disposed with approximately one face, and through the window holes 11c of the rising portions 11a of the base portion 1b, the shield body 4' projects to the outside and enables visual confirmation of this. Also, the shield body 4' covers over the display portion 13h formed in the base portion 1b which is under this shield body 4'. (Fig. 37)

If the male part 2 is inserted up to the insertion ending position, a pressing portion 21b formed on the head portion 2a side of the male part 2 pushes a border portion of the through hole 3a of the base 31b. In the illustrated examples, a storage gap 11e for the connecting pieces 31c of the movable part 3 are formed between the rising portions 11a and the insertion hole 1c, and the movable part 3 in which the base 31b is pushed by the pressing portion 21b, elastically deforms the connecting portions 31a, and pulls the connecting pieces 31c into this storage gap 11e. With this, the shield body 4' is pulled into the window holes 11c and hidden in a position which cannot be seen from the head portion 2a side of the male part 2. With that, the display portion 13h of the base portion 1b which is positioned under the shield body 4' enables visual confirmation of the forward movement front position of the shield body 4'. (Fig. 38)

Even in this example, the clip is fixed on the fixing object P in the formation positions of the through holes Pa of the fixing object P by inserting the male part 2 into the insertion ending position. With that, due to the forward movement of the shield body 4', the display portion 13h of the base portion 1b enables visual confirmation that the male part 2 is inserted up to the insertion ending position, and the state wherein the clip is in the desired fixed state can be easily confirmed without measuring the insertion state of the male part 2 and the like. At least a color of the shield body 4' is varied from the color of the base portion of the female part, so that in the forward movement front position of the shield body 4', a portion of the base portion 1b which is positioned under this shield body 4' can function as the above-mentioned display portion 13h. Alternatively, by printing a pattern on the portion of such base portion 1b, or putting a seal or applying paint on the portion of this base portion 1b and the like, the portion of this base portion 1b function as the above-mentioned display portion 13h.

### (Fifth example shown in Figs. 39, 40)

Figs. 39, 40 mainly show an example wherein a portion of the structure of the movable part 3 which constitutes the above-mentioned third example is modified.

In this example, the shield body 4' is provided in the base portion 1b of the female part 1, and hides the display portion 13h provided in this base portion 1b at the forward movement front position. Also, the shield body 4' moves forward by inserting the male part in the insertion ending position, and is housed inside the base portion at the forward movement ending position, so that the above-mentioned display portion 13h enables visual confirmation of this. The display bodies in the above-mentioned third example function as such shield body 4'.

The shield body 4' constituting the movable part 3 which is supported so as to be slidably movable in the direction perpendicular to the insertion direction of the male part 2 in the guide holes 13b of the female part 1, enables visual confirmation through the open portions Sa communicating with the guide holes 13b in the state wherein the male part 2 is not inserted up to the insertion ending position. Also, the shield body 4' covers over the display portion 13h formed in the base portion 1b which is under this shield body 4'. (Fig. 39) On a through portion 33a side of the shield body 4', a projected portion 33d projecting to the insertion near side of the male part 2 is formed in the inner side of the rising portion 13a. Also, in this projected portion 33d, an inclined portion 33c which faces to the head portion 23a side of the male part 2, is formed. This inclined portion 33c inclines in a direction of gradually moving away from an outer end of the shield body 4' as the inclined portion 33c moves to a projecting end of the projected portion 33d.

If the male part 2 is inserted up to the insertion ending position, a pressing portion 23j formed on the head portion 23a side of the male part 2 pushes the inclined portion 33c of the projected portion 33d of the movable part 3. In the inclined portion 33c, an incline in the above-mentioned direction is formed, so that the movable part 3 in which the inclined portion 33c is pushed by the pressing portion 23j moves inward, and the shield body 4' is hidden in the position which cannot be seen from the head portion 23a side of the male part 2 through the open portions Sa. With that, the display portion 13h of the base portion 1b which is positioned under the shield body 4' enables visual confirmation of the forward movement front position of the shield body 4'. (Fig. 40)

Even in this example, the clip is fixed on the fixing object P in the formation positions of the through holes Pa of the fixing object P by inserting the male part 2 into the insertion ending position. With that, due to the forward movement of the shield body 4', the display portion 13h of the base portion enables visual confirmation that the male part 2 is inserted up to the insertion ending position, and the state wherein the clip is in the desired fixed state can be easily confirmed without measuring the insertion state of the male part 2 and the like. At least the color of the shield body 4' is varied from the color of the base portion of the female part, so that in the forward movement front position of the shield body 4', the portion of the base portion 1b which is positioned under this shield body 4' can be functioned as the above-mentioned display portion 13h. Alternatively, by printing the pattern on the portion of such base portion 1b, or putting the seal or applying paint on the portion of this base portion 1b and the like, the portion of this base portion 1b can function as the above-mentioned display portion 13h.

Incidentally, the specification, claims, drawings, and abstract of Japanese Patent Application No. 2007-276083 filed on October 24, 2007 are cited in their entirety herein and are incorporated as a disclosure of the specification of the present invention.

## Claims

1. A clip fixed on a fixing object by inserting a male part into an insertion ending position of a female part, said female part having a receiving space for the male part and including a base portion provided with an insertion hole communicating with the receiving space and an inserted portion for a through hole provided in the fixing object, so that at least a portion of the inserted portion is deflected or an elastic engaging portion formed in the inserted portion is prevented from being deflected inwardly to thereby be fixed on the fixing object,
wherein in the base portion of the female part, a display body which moves forward by inserting the male part into the insertion ending position so as to enable to be visually confirmed at a forward movement ending position, is provided.

2. A clip according to claim 1, wherein the display body is formed so as to move backward by extracting the male part from the insertion ending position.

3. A clip according to claim 1 or claim 2, wherein the display body is provided in a movable part which is combined on the base portion of the female part so as to be movable, and the display body is positioned in the forward movement ending position at the forward movement ending position of the movable part.

4. A clip according to claim 3, wherein the movable part is connected to the display body through a connecting portion which is elastically deformable, is supported by the display body in an uplifted manner, and also comprises a base where a portion of the male part is pressed against by inserting the male part into the insertion ending position, and the display body is visually confirmed by elastically deforming the connecting portion at the insertion ending position.

5. A clip according to claim 4, wherein the male part is provided with a backward-movement projection which is caught by the base of the movable part when the male part is extracted from the insertion ending position.

6. A clip according to claim 3, wherein the movable part is combined in the base portion of the female part so as to be rotatable,
a cam groove is formed in either one of the movable part or the male part, and a projected portion which is housed in the cam groove in a complementary manner by inserting the male part into the insertion ending position, is formed in the other of the movable part or the male part, and
due to the cam groove and the projected portion, the display body is visually confirmed at the insertion ending position.

7. A clip according to claim 3, wherein the movable part is pushed by the portion of the male part by inserting the male part into the insertion ending position, is slidably moved in a direction of moving away from the insertion hole, and is completely finished by being slidably moved at the insertion ending position so that the display body is visually confirmed.

8. A clip according to any one of claims 3 to 7, wherein a support space of the movable part is formed inside the base portion of the female part, and also an open portion communicating with the support space is provided on an upper surface side of the base portion, and the display body which is in the forward movement ending position is visually confirmed through the open portion.

9. A clip according to any one of claims 3 to 8, wherein stopper portion which mutually engages the movable part and the base portion of the female part at the forward movement front position of the movable part, is formed.

10. A clip according to any one of claims 3 to 9, wherein a color of the movable part is different from colors of the female part and the male part.

11. A clip fixed on a fixing object by inserting a male part into an insertion ending position of a female part, said female part having a receiving space for the male part and including a base portion provided with an insertion hole communicating with the receiving space and an inserted portion for a through hole provided in the fixing object, so that at least a portion of the inserted portion is deflected or elastic engaging portion formed in the inserted portion is prevented from being deflected inwardly to thereby be fixed on the fixing object,
wherein a shield body is provided in the base portion of the female part, the shield body hiding a display portion provided in the base portion at a forward movement front position, moving forward by inserting the male part into the insertion ending position, and being housed inside the base portion at the forward movement ending position so as to visually confirm the display portion.
